# EUROPEAN PATENT SPECIFICATION

(11) **EP 3 116 165 B1**
(45) Date of publication and mention of the grant of the patent: **12.09.2018**
(21) Application number: 16177804.8
(22) Date of filing: 04.07.2016
(51) Int. Cl.: H04L 12/26, H04W 24/00

(54) **METHOD AND DEVICE FOR TESTING A TERMINAL**
VERFAHREN UND VORRICHTUNG ZUM TESTEN EINES ENDGERÄTS
PROCÉDÉ ET DISPOSITIF POUR TESTER UN TERMINAL

(30) Priority: 10.07.2015 CN 201510406133
(43) Date of publication of application: 11.01.2017
(73) Proprietor: Xiaomi Inc., Beijing 100085 (CN)
(72) Inventor: ZHANG, Yanlu, Beijing 100085 (CN); HOU, Enxing, Beijing 100085 (CN); GAO, Ziguang, Beijing 100085 (CN)
(74) Representative: Perrot, Emilie

(56) References cited:
- EP-A2- 2 180 350
- WO-A1-2015/058653
- JIANG BO ET AL: "MobileTest", AUTOMATION OF SOFTWARE TEST, IEEE COMPUTER SOCIETY, 1730 MASSACHUSETTS AVE., NW WASHINGTON, DC 20036-1992 USA, 20 May 2007 (2007-05-20), page 8, XP058142977, DOI: 10.1109/AST.2007.9 ISBN: 978-0-7695-2971-4

## Description

### TECHNICAL FIELD

The present invention generally relates to the field of the computer technology, and more particularly, to a method, a device, a computer program, a recording medium for testing a terminal.

### BACKGROUND

In related technologies, with the development of the computer technology and the wireless communication technology, more and more electronic devices are equipped with a wireless communication module, for example, a smart mobile phone or a tablet computer with it is capable of wireless communicating. The wireless communication technology is widely used in the field of smart terminals, smart homes, etc. Before an electronic device is delivered, a test technician may test the electronic device in terms of hardware and software, so as to ensure normal use of the electronic device.

Document EP 2 180 350 discloses a method of testing at least one unit of a subterranean survey system. Document WO 2015/058653 discloses a fault diagnosis method.

### SUMMARY

Embodiments of the present invention provide a method and a device for testing a terminal. It is used to conveniently record a test result of an electronic device, so as to improve efficiency of testing the electronic device before it is delivered. The technical solution is as below: According to the present invention a method for testing a terminal is provided as stated in claim 1.

The technical solution provided by the embodiment of the present invention may include the following beneficial effects: by means of the preset trigger condition, a connection with the preset device is determined; after the connection with the preset device is established, an automatic detection program is started, and the automatic detection result is sent to the preset device. An automatic detection program needs to be started for the device under test, then the device after test is delivered. For a conventional process of starting the automatic detection program, each device under test needs to be manually started by a test technician. Thus multiple operations are needed. The automatic detection program of the device under test is immediately started if the preset trigger condition is satisfied, which allows implementing simultaneous starting of the automatic detection program for devices under test, and improve efficiency of testing the devices under test before they are delivered. The device under test simultaneously sends the automatic detection result to the preset device, which may facilitate the recording of a test result of the device under test.

In a particularly embodiment, the step of establishing a connection with a preset device when a preset trigger condition is detected comprises: establishing a connection with the preset device according to a preset identifier and a preset password when preset input operation information is detected.

The technical solution provided by the embodiment of the present invention may include the following beneficial effects: when preset input operation information is detected, a preset device is connected according to a preset identifier and a preset password. This means that the preset input operation information serves as a preset trigger condition. The preset input operation facilitates operation of a test technician, thereby improving the efficiency of testing a device under test before it is delivered.

In a particularly embodiment, the detection of a preset trigger condition comprises:
the detection of a network device having a preset identifier;
the preset device comprises the network device having a preset identifier; and
the step of establishing a connection with a preset device when a preset trigger condition is detected comprises:
   detecting the network device in a current network; and
   connecting, when the network device having a preset identifier is detected, the network device having a preset identifier according to a preset password corresponding to the preset identifier, and establishing a connection with the network device having the preset identifier.

The technical solution provided by the embodiment of the present invention may include the following beneficial effects: when the preset trigger condition is that a network device being the same as the network device having a preset identifier is detected, detection of the network device in the current network is automatically conducted by a device under test, without a manual search by a test technician. When the device under test is detected, the device under test is placed, by the test technician, in a network environment of the network device being the same as the network device having the preset identifier. In this way, an automatic detection program of the device under test may be started, thereby further improving the efficiency of testing the device under test before it is delivered.

In a particularly embodiment, the step of sending the automatic detection result to the preset device comprises:
generating a detection log according to the automatic detection result; and
sending the detection log to the preset device.

The technical solution provided by the embodiment of the present invention may include the following beneficial effects: the automatic detection result is sent to the preset device in the form of a detection log, which may facilitate data transmission of the automatic detection result, and help the test technician in looking up the automatic detection result on the preset device, thereby further improving the efficiency of testing the device under test before it is delivered.

In a particularly embodiment, the preset device comprises a network access device;
when the preset device is the network access device, the step of sending the detection log to the preset device comprises:
sending the detection log to the network access device, and instructing the network access device to transfer the detection log to a test host.

The technical solution provided by the embodiment of the present invention may include the following beneficial effects: when the preset device is a network access device, the detection log is transferred, by the device under test, to the test host via the network access device, allowing the preset device to transfer the detection log to one or more test host pairs, which may help the test host in data acquisition of the detection log of the device under test, thereby further facilitating recording a test result of the device under test.

In a particularly embodiment, when the preset device is the network access device, after the step of establishing a connection with a preset device, the method further comprises:
sending a wake-up message to the network access device, and instructing the network access device to transfer the wake-up message to the test host, so that the test host enters in a working state according to the wake-up message;
the sending the detection log to the network access device, and instructing the network access device to transfer the detection log to a test host comprising:
   after sending the wake-up message to the network access device, sending the detection log to the network access device, and instructing the network access device to transfer the detection log to the test host.

The technical solution provided by the embodiment of the present invention may include the following beneficial effects: after the preset device is connected, a wake-up message is sent to the network access device, so that the test host enters in a working state; after the wake-up message is sent to the network access device, a detection log is sent to the network access device, and is transferred via the network access device to the test host. It is achieved that the test host may enter in a dormant state when it is not in the working state, thereby reducing resource consumption of the test host. When the test host is in the dormant state, the test host may still quickly access the detection log transferred by the network access device, thereby improving the efficiency of testing the device under test before it is delivered. According to the present invention a device for testing a terminal is provided as stated in claim 4.

In a particularly embodiment, the establishing module comprises:
a first establishing submodule configured to establish a connection with the preset device according to a preset identifier and a preset password when preset input operation information is detected.
In a particularly embodiment, the detection of a preset trigger condition comprises: detecting when a network device having a preset identifier;
the preset device comprising the network device having a preset identifier; and
the establishing module comprising:
   a detecting submodule configured to detect the network device in a current network;
   a second establishing submodule configured to connect, when the network device having a preset identifier is detected, the network device having a preset identifier according to a preset password corresponding to the preset identifier, and establish a connection with the network device having the preset identifier.

In a particularly embodiment, the first sending module comprises:
a generating submodule configured to generate a detection log according to the automatic detection result; and
a first sending submodule configured to send the detection log to the preset device.

In a particularly embodiment, the preset device comprises: a network access device;
when the preset device is the network access device, the first sending module comprises:
a second sending submodule configured to send the detection log to the network access device, and instruct the network access device to transfer the detection log to a test host.

In a particularly embodiment, the device further comprises:
a second sending module configured to send a wake-up message to the network access device, and instruct the network access device to transfer the wake-up message to the test host, so that the test host enters in a working state according to the wake-up message; where
the second sending submodule is further configured to send, after sending a wake-up message to the network access device, the detection log to the network access device, and instruct the network access device to transfer the detection log to the test host.
According to the present invention a computer program for testing a terminal is provided as stated in claim 7.

This program can use any programming language and take the form of source code, object code or a code intermediate between source code and object code, such as a partially compiled form, or any other desirable form.

The invention is also directed to a recording medium readable by a computer as stated in claim 8.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart of a method for testing a terminal according to an exemplary embodiment;
Fig. 2 is a detailed flowchart of a method for testing a terminal according to an exemplary embodiment;
Fig. 3 is a detailed flowchart of a method for testing a terminal according to an exemplary embodiment;
Fig. 4 is a detailed flowchart of a method for testing a terminal according to an exemplary embodiment;
Fig. 5 is a block diagram of a device for testing a terminal according to an exemplary embodiment;
Fig. 6 is a block diagram of an establishing module in a device for testing a terminal according to an exemplary embodiment;
Fig. 7 is a block diagram of an establishing module in a device for testing a terminal according to an exemplary embodiment;
Fig. 8 is a block diagram of a first sending module in a device for testing a terminal according to an exemplary embodiment;
Fig. 9 is a block diagram of a first sending module in a device for testing a terminal according to an exemplary embodiment;
Fig. 10 is a block diagram of a device for testing a terminal according to an exemplary embodiment; and
Fig. 11 is a block diagram of a device for testing a terminal according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

With the development of the computer technology and the wireless communication technology, more and more electronic devices are equipped with a wireless communication module, for example, to make a smart mobile phone or a tablet computer capable of wireless communicating. The wireless communication technology is widely used in the field of smart terminals, smart homes, etc. Before an electronic device is delivered, a test technician may test the electronic device in terms of hardware and software, so as to ensure normal use of the electronic device. An electronic device serves as an exemplary device under test in the embodiment of the present invention.

In related technologies, a test technician needs to start an automatic detection program for each device under test by means of a mobile phone. After the automatic detection of the device under test is completed, the test technician sends an automatic detection result to a test host via the mobile phone. If ten devices under test need an automatic detection, the test technician needs to conduct ten corresponding operations, thus wasting a lot of time. Nevertheless, an actual number of devices under test is much larger than ten, the test technician needs plenty of time to start automatic detection programs and send automatic detection results, and then needs to process each of the automatic detection results received by the test host. Therefore, the detection efficiency of devices under test is low.

An embodiment of the present invention provides a method for testing a terminal. By means of the preset trigger condition, a connection with a preset device is determined; after the connection with the preset device is established, an automatic detection program is started, and an automatic detection result is sent to the preset device. Before a device under test is delivered, an automatic detection program of the device under test needs to be started. For a conventional process of starting the automatic detection program, each device under test needs to be manually started by a test technician. Thus multiple operations are needed. The automatic detection program of the device under test is immediately started if the preset trigger condition is satisfied, which allows implementing simultaneous starting of the automatic detection program of devices under test, and improve efficiency of testing the devices under test before delivery. The device under test simultaneously sends the automatic detection result to the preset device, which may facilitate the recording of a test result of the device under test.

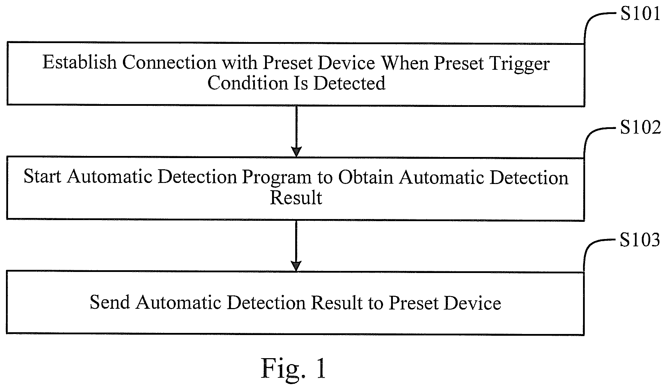

Fig. 1 is a flowchart of a method for testing a terminal according to an exemplary embodiment. As shown in Fig. 1, the method for testing a terminal is performed by a device under test, and includes the following steps:
In Step S101, when a preset trigger condition is detected, a connection with a preset device is established. Connection manners of the preset device include: a WiFi (a wireless network equipment technology) connection manner, a Bluetooth connection manner and an NFC (Near Field Communication) connection manner. When the foregoing three connection manners are used for connecting the preset device, not only the automatic detection result may be transferred to the preset device in the foregoing three connection manners, but also whether functional modules in the foregoing three connection manners work properly may be detected , which also is a part of the automatic detection. It is possible to reduce a detection, by an automatic detection program, on the functional modules in the foregoing three connection manners, thereby improving the efficiency of testing the device under test before it is delivered.
In Step S102, an automatic detection program is started to obtain an automatic detection result.
In Step S103, the automatic detection result is sent to the preset device.

An embodiment of the present invention provides a method for testing a terminal. By means of the preset trigger condition, a connection with a preset device is determined; after the connection with the preset device is established, an automatic detection program is started, and an automatic detection result is sent to the preset device. Before a device under test is delivered, an automatic detection program of the device under test needs to be started. For a conventional process of starting the automatic detection program, each device under test needs to be manually started by a test technician. Thus multiple operations are needed. The automatic detection program of the device under test is immediately started if the preset trigger condition is satisfied, which allows implementing simultaneous starting of the automatic detection program for devices under test, and improve efficiency of testing the devices under test before they are delivered. The device under test simultaneously sends the automatic detection result to the preset device, which may facilitate the recording of a test result of the device under test.

In an embodiment, Step S101 may also be implemented as below: a connection with the preset device is established according to a preset identifier and a preset password when preset input operation information is detected.

For example, the preset identifier is a hardware identifier of a preset device, such as an SSID (Service Set Identifier), or a MAC (Media Access Control) address, etc. Each preset device has a different hardware identifier. Therefore, a preset device may be accurately determined by using a hardware identifier of the preset device as a preset identifier.

By using the foregoing method, when preset input operation information is detected, a preset device is connected according to a preset identifier and a preset password. This means that the preset input operation information serves as a preset trigger condition. The preset input operation facilitates operation of a test technician, thereby improving the efficiency of testing a device under test before it is delivered.

In an embodiment, the detection of a preset trigger condition includes the detection of a network device having a preset identifier, where the preset device includes the network device having a preset identifier. Step S101 may also comprise Step A1 and Step A2.

In Step A1, the network device in the current network is detected.

In Step A2, when a network device having a preset identifier is detected, the network device having a preset identifier is connected according to a preset password corresponding to the preset identifier, and a connection with the network device having the preset identifier is established.

For example, the device under test is an electronic device having a WiFi (a wireless network equipment technology) function, such as a mobile phone, a tablet computer, a smart home device or the like. It is a basic function of the device under test to automatically detect a network device in the current environment. The device under test may conduct a detection of a network device in the environment in real time. If the environment has a network device having a preset identifier, a connection with the network device is established, and then an automatic detection program is started.

By using the foregoing method, when the preset trigger condition is that a network device being the same as the network device having a preset identifier is detected, detection of the network device in the current network is automatically conducted by a device under test, without a manual search by a test technician. When the device under test is detected, the device under test is placed, by the test technician, in a network environment of the network device being the same as the network device having a preset identifier. In this way, an automatic detection program of the device under test may be started, thereby further improving the efficiency of testing the device under test before it is delivered.

In an embodiment, Step S103 may also comprise Step B1 and Step B2.

In Step B1, a detection log is generated according to the automatic detection result.

In Step B2, the detection log is sent to the preset device.

By using the foregoing method, an automatic detection result is sent to the preset device in the form of a detection log, which may facilitate data transmission of the automatic detection result, and help the test technician in looking up the automatic detection result on the preset device, thereby further improving the efficiency of testing the device under test before it is delivered.

In an embodiment, the preset device includes a network access device; when the preset device is the network access device, Step B2 may also comprise a Step C1, wherein a detection log is sent to the network access device, and the network access device is instructed to transfer the detection log to a test host.

For example, the preset device includes the network access device and the test host. Namely, the device under test may either be directly connected to the test host or be connected to the test host via the network access device. When the preset device is the test host, Step B2 may also comprise the sending of the detection log to the test host. However, the test host may be not the unique test device, and multiple test hosts may exist. When at least two test hosts exist, when the device under test sends a detection log to the test hosts, the device under test needs to send data of the detection log at least twice, or only send the detection log once to either of the test hosts. No matter which one of the foregoing two manners is used, it is impossible to ensure a record efficiency of the test hosts and a transmission efficiency of the detection log simultaneously.

By using the foregoing method, when the preset device is a network access device, the detection log is transferred, by the device under test, to a test host via the network access device, allowing the preset device to transfer the detection log to one or more test host pairs, which may help the test host in data acquisition of the detection log of the device under test, thereby further facilitating recording a test result of the device under test.

In an embodiment, when the preset device is the network access device, after Step S101, the method further includes a Step D1, wherein a wake-up message is sent to the network access device, and instructing the network access device to transfer the wake-up message to a test host, so that the test host enters in a working state according to the wake-up message.

Step C1 may also comprise, after sending a wake-up message to the network access device, the sending of a detection log to the network access device, and instructing the network access device to transfer the detection log to the test host.

By using the foregoing method, after the preset device is connected, a wake-up message is sent to the network access device, so that the test host enters in a working state; after the wake-up message is sent to the network access device, a detection log is sent to the network access device, and is transferred via the network access device to the test host. It is achieved that the test host may enter in a dormant state when it is not in the working state, thereby reducing resource consumption of the test host. When the test host is in the dormant state, the test host may still quickly access the detection log transferred by the network access device, thereby improving the efficiency of testing the device under test before it is delivered.

The following will describe the methods provided in the present invention with reference to embodiments.

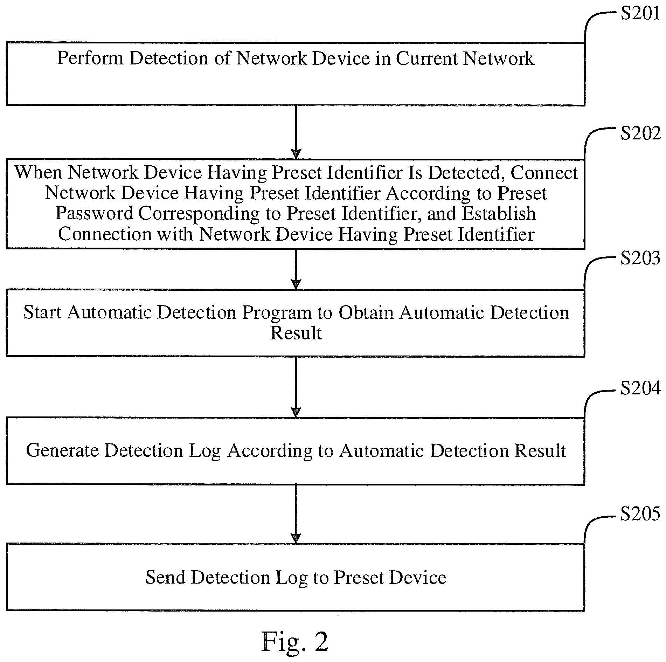

As shown in Fig. 2, an embodiment of the present invention provides a method for testing a terminal, in which a preset device is a test host. The steps of this method are as below.

In Step S201, a detection of a network device in the current network is performed.

A detection is performed to detect whether in the current network, a network device with the username "test device" is present.

In Step S202, when a network device having a preset identifier is detected, the network device having a preset identifier is connected according to a preset password corresponding to the preset identifier, and a connection with the network device having the preset identifier is established.

The preset identifier is "test device", the username of the network device in the network is the same as a preset user, and a connection with the network device whose username is "test device" is established according to a preset password corresponding to the preset identifier.

In Step S203, an automatic detection program is started to obtain an automatic detection result.

After a connection with the network device whose username is "test device" is established, the device under detection starts a local automatic detection program and obtains an automatic detection result.

In Step S204, a detection log is generated according to the automatic detection result.

In Step S205, the detection log is sent to the preset device.

An embodiment of the present invention provides a method for testing a terminal. When the preset trigger condition is that a network device being the same as the network device having a preset identifier is detected, detection of the network device in the current network is automatically conducted by a device under test, which does not need a manual search by a test technician; when the device under test is detected, the device under test is placed, by the test technician, in a network environment of the network device being the same as the network device having a preset identifier. In this way, an automatic detection program of the device under test may be started, thereby further improving the efficiency of testing the device under test before it is delivered. When a unique network device exists in the network, it means that the device under test is positioned in a test site, not in a non-test site where a network device having a username being the same as the preset identifier exists, thereby avoiding the device under test from starting the automatic detection program in the non-test site. An automatic detection result is sent to the preset device in the form of a detection log, which may facilitate data transmission of the automatic detection result, and help the test technician in looking up the automatic detection result on the preset device, thereby further improving the efficiency of testing the device under test before it is delivered.

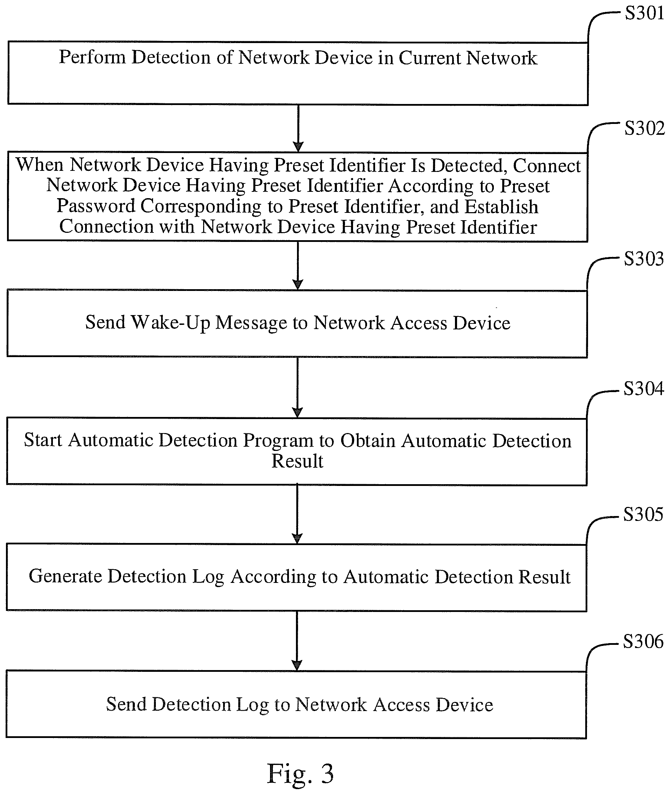

As shown in Fig. 3, an embodiment of the present invention provides a method for testing a terminal, in which the preset device is a network access device, such as a router. The method includes the steps as below.

In Step S301, a detection of a network device in the current network is performed.

A detection is performed to detect whether in the current network, a network device with the username "test device" is present.

In Step S302, when a network device having a preset identifier is detected, the network device having a preset identifier is connected according to a preset password corresponding to the preset identifier, and a connection with the network device having the preset identifier is established.

The preset identifier is "test device", the username of the router in the network is the same as a preset user, and a connection with the router whose username is "test device" is established according to a preset password corresponding to the preset identifier.

In Step S303, a wake-up message is sent to the network access device, and the network access device is instructed to transfer the wake-up message to a test host, so that the test host enters in a working state according to the wake-up message.

A wake-up message is sent to the router whose username is "test device". The test host is in a dormant state when it is not in a working state, which may reduce power consumption of the test host, and reduce an effect on the service life of the test host due to a long running. Therefore, after a connection with the router is established, a wake-up message is sent to the test host via the router, and the wake-up message may enable the test host to enter, from the dormant state, into the working state.

In Step 304, an automatic detection program is started to obtain an automatic detection result.

In Step 305, a detection log is generated according to the automatic detection result.

In Step 306, the detection log is sent to a network access device, and the network access device is instructed to transfer the detection log to the test host.

An embodiment of the present invention provides a method for testing a terminal. When the preset device is the network access device, a detection log is transferred, by the device under test, to the test host via the network access device. It is possible to achieve that the detection log is transferred by the preset device to one or more test host pairs, which may help the test host in data acquisition of the detection log of the device under test, thereby further facilitating recording a test result of the device under test. After a network access device is connected, a wake-up message is sent to the network access device, and the wake-up message is transferred to the test host via the network access device, so that the test host enters in a working state. After the wake-up message is sent to the network access device, a detection log is sent to the network access device, and is transferred to the test host via the network access device. It is implemented that the test host may enter in a dormant state when it is not in the working state, thereby reducing resource consumption of the test host. When the test host is in the dormant state, the test host may still quickly restore to access the detection log transferred via the network access device, thereby improving the efficiency of testing the device under test before it is delivered.

A method for testing a terminal provided by the embodiment of the present invention may be implemented as the foregoing two technical solutions, and a connection between a to-be-detected device and a preset device may be achieved by means of the following technical solution.

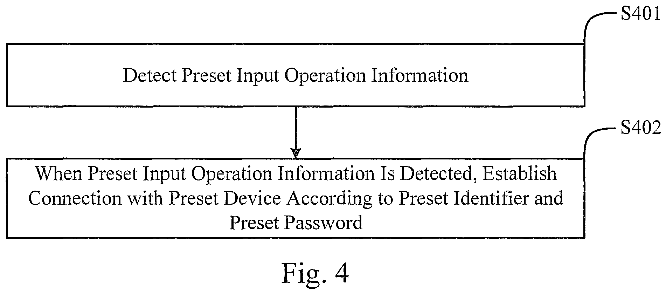

As shown in Fig. 4, the embodiment of the present invention provides a method for testing a terminal. The method includes steps as below.

In Step S401, detection is performed on preset input operation information.

A preset input operation may be either an operation of the test technician by pressing a special key combination on the device, or a special input on a device interface, as long as the preset input operation is an operation infrequently used by a user or other operators.

In Step S402, when preset input operation information is detected, a connection with the preset device is established according to a preset identifier and a preset password.

When the to-be-detected device is manufactured, a preset identifier and a preset password are set in the to-be-detected device in advance. The preset identifier is a hardware identifier of the preset device. When the to-be-detected device detects preset input operation information, the to-be-detected device is connected to the preset device corresponding to the preset identifier, and then an automatic detection is conducted on the connected to-be-detected device. An automatic detection result is sent to the preset device.

An embodiment of the present invention provides a method for connecting the preset device in a method for testing a terminal. When preset input operation information is detected, the preset device is connected according to a preset identifier and a preset password, which shows that the preset input operation information serves as a preset trigger condition, and a preset input operation facilitates operation of a test technician, thereby improving the efficiency of testing a device under test before it is delivered.

The following is the embodiment of the device in the present invention, which may be configured to carry out the methods according to the embodiments of in the present invention.

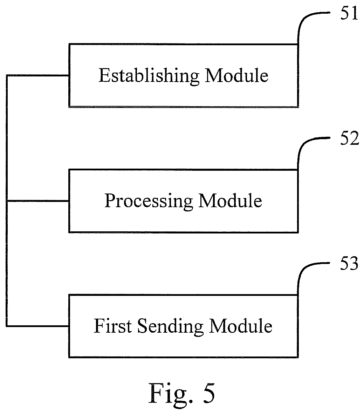

Fig. 5 is a block diagram of a device for testing a terminal according to an exemplary embodiment. The device may be implemented as an electronic device in part or in whole by means of software and hardware or combination of both. As shown in Fig. 5, the device for testing a terminal comprised in a device under test includes:
an establishing module 51, configured to establish a connection with a preset device when a preset trigger condition is detected;
a processing module 52, configured to start an automatic detection program to obtain an automatic detection result; and
a first sending module 53, configured to send the automatic detection result to the preset device.

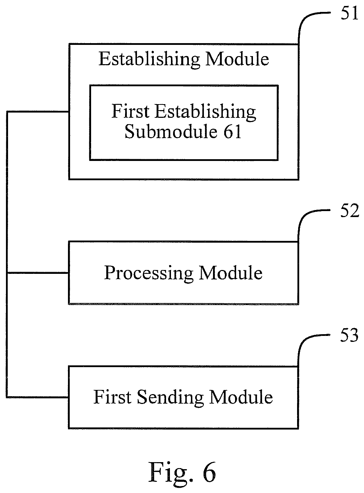

As shown in Fig. 6, the establishing module 51 includes:
a first establishing submodule 61, configured to establish a connection with the preset device according to a preset identifier and a preset password when preset input operation information is detected.

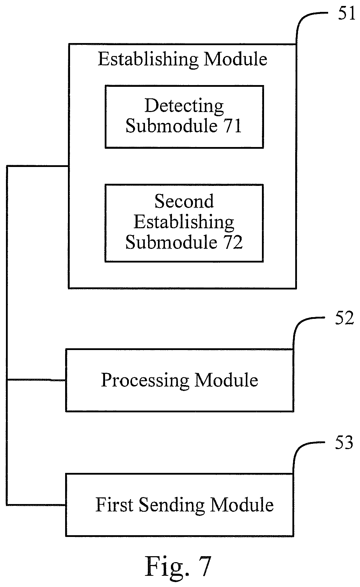

As shown in Fig. 7, the detection of a preset trigger condition includes the detection of a network device having a preset identifier.

The preset device includes: the network device having a preset identifier.

The establishing module 51 includes:
a detecting submodule 71, configured to detect the network device in the current network; and
a second establishing submodule 72, configured to connect, when a network device being the same as the network device having a preset identifier is detected, the network device having a preset identifier according to a preset password corresponding to the preset identifier, and establish a connection with a preset device.

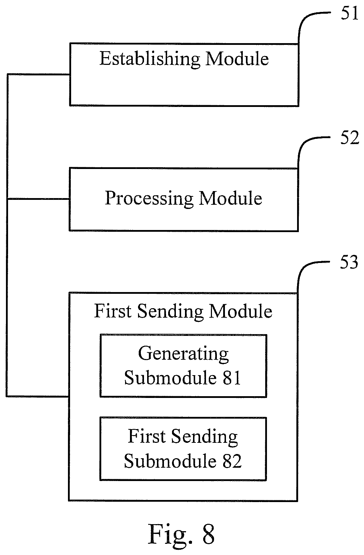

As shown in Fig. 8, the first sending module 53 includes:
a generating submodule 81, configured to generate a detection log according to the automatic detection result; and
a first sending submodule 82, configured to send the detection log to the preset device.

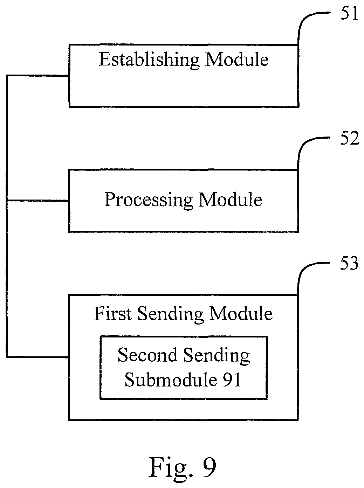

As shown in Fig. 9, the preset device includes a network access device.

When the preset device is the network access device, the first sending module 53 includes:
a second sending submodule 91, configured to send the detection log to the network access device, and instruct the network access device to transfer the detection log to a test host.

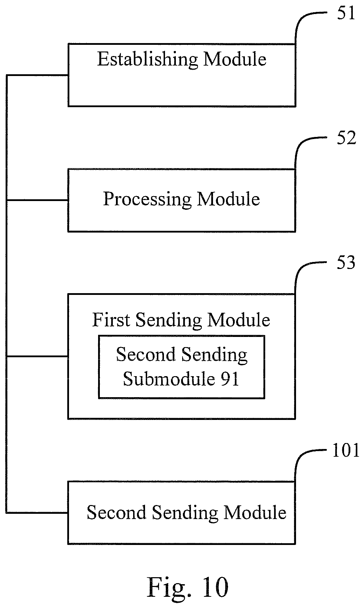

As shown in Fig. 10, the device further includes:
a second sending module 101, configured to send a wake-up message to the network access device, and instruct the network access device to transfer the wake-up message to the test host, so that the test host enters in a working state according to the wake-up message.

The second sending submodule 91 is further configured to send, after sending a wake-up message to the network access device, a detection log to the network access device, and instruct the network access device to transfer the detection log to the test host.

A device for testing a terminal, including:
a processor; and
a memory configured to store instructions executable by a processor;
where the processor is configured to:
   establish a connection with a preset device when a preset trigger condition is detected;
   start an automatic detection program to obtain an automatic detection result; and
   send the automatic detection result to the preset device.

The processor also may be configured to:
establish a connection with the preset device when a preset trigger condition is detected, including: detecting preset input operation information, and establishing a connection with the preset device according to a preset identifier and a preset password.

The processor also may be configured to:
That when a preset trigger condition is detected includes: when a network device having a preset identifier is detected;
the preset device includes the network device having a preset identifier;
the establishing a connection with a preset device when a preset trigger condition is detected includes:
perform a detection of the network device in the current network;
connecting, when the network device having a preset identifier is detected, the network device having a preset identifier according to a preset password corresponding to the preset identifier, and establishing a connection with the network device having the preset identifier.

The processor also may be configured to:
send an automatic detection result to the preset device, including:
generating a detection log according to the automatic detection result; and
sending the detection log to the preset device.

The processor also may be configured to:
the preset device includes a network access device;
send, when the preset device is the network access device, the detection log to the preset device, including:
   sending the detection log to the network access device, and instructing the network access device to transfer the detection log to a test host.

The processor also may be configured to:
when the preset device is the network access device, after the establishing a connection with a preset device, the method further includes:
sending a wake-up message to the network access device, and instructing the network access device to transfer the wake-up message to the test host, so that the test host enters in a working state according to the wake-up message;
the sending the detection log to the network access device, and instructing the network access device to transfer the detection log to a test host include:
   after sending the wake-up message to the network access device, sending the detection log to the network access device, and instructing the network access device to transfer the detection log to the test host.

With regard to the device in the above embodiment, detailed description of specific modes for performing operations of the modules has been made in the embodiment related to the methods, no detailed illustration will be made herein.

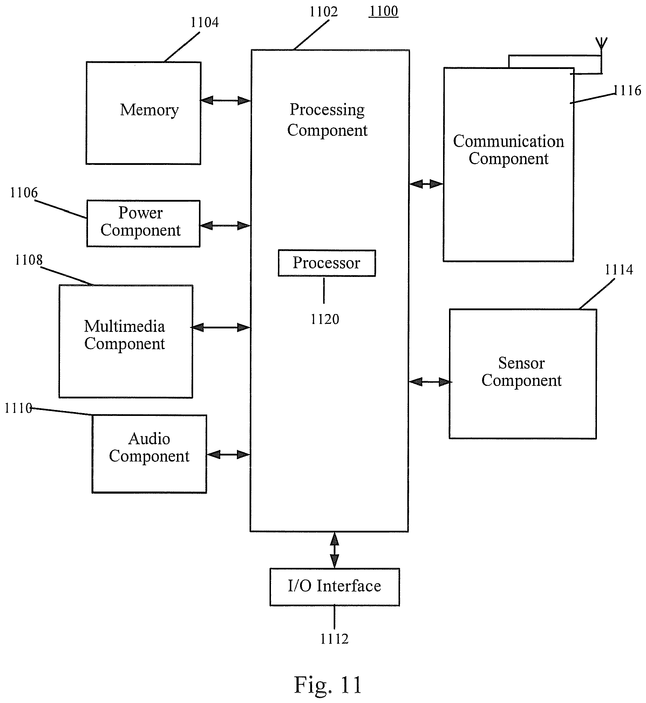

Fig. 11 is a block diagram of a device for testing a terminal according to an exemplary embodiment. The device may be applied to a terminal device. For example, the device 1100 may be a mobile telephone, a computer, a digital broadcasting terminal, a message transceiver device, a games console, a tablet device, a medical device, a fitness facility, a personal digital assistant and the like.

The device 1100 may include one or more components as below: a processor component 1102, a memory 1104, a power supply component 1106, a multimedia component 1108, an audio component 1110, an input/output (I/O) interface 1112, a sensor component 1114 and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or may have focus and optical zoom capability.

The audio component 1110 is configured to output and/or input audio signals. For example, the audio component 1110 includes a microphone configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect open/closed statuses of the device 1100, and relative positioning of components, such as the display and the keypad. The sensor component 1114 may also detect position changes of the device 1100 or its components, presence or absence of user contacts with the device 1100, orientation or acceleration/deceleration of the device 1100, and temperature changes of the device 1100. The sensor component 1114 may further include a proximity sensor configured to detect the presence of nearby objects without any physical contact. Moreover, the sensor component 1114 may include a light sensor, such as a CMOS or CCD image sensor, for use in imaging applications. In some embodiments, the sensor component 1114 may also include an acceleration sensor, a gyroscope sensor, a magnetic sensor, a pressure sensor, or a temperature sensor.

The communication component 1116 is configured to facilitate wired or wireless communication between the device 1100 and other devices. The device 1100 can access a wireless network based on a communication standard, such as WiFi, 2G, 3G, or a combination thereof. In one exemplary embodiment, the communication component 1116 receives a broadcast signal or broadcast related information from an external broadcast management system via a broadcast channel. In another exemplary embodiment, the communication component 1116 further includes a near-field communication (NFC) module to facilitate short-range communications. The NFC module, for example, may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium storing instructions, such as stored in the memory 1104, executable by the processor 1120 in the device 1100, for performing the above-described methods. For example, the non-transitory computer-readable storage medium may be a ROM, a random access memory (RAM), a CD-ROM, a magnetic tape, a floppy disc, an optical data storage device, and the like.

## Claims

1. A method for testing a terminal, performed by a device under test, comprising:
establishing (S101) a connection with a preset device when a preset trigger condition is detected, wherein connection manners of the preset device include a wireless network equipment technology connection manner, a Bluetooth connection manner and a Near Field Communication connection manner;
starting (S102, S203, S304) an automatic detection program to obtain an automatic detection result; and
sending (S103) the automatic detection result to the preset device.
wherein the step of sending the automatic detection result to the preset device comprises:
generating (S204, S305) a detection log according to the automatic detection result; and
sending (S205, S306) the detection log to the preset device,
wherein the preset device is a network access device;
**characterized in that** it further comprises:
the step of sending the detection log to the preset device comprises:
sending (S205) the detection log to the network access device, and instructing the network access device to transfer the detection log to a test host; and
after the step of establishing a connection with a preset device, the method further comprises:
sending (S303) a wake-up message to the network access device, and instructing the network access device to transfer the wake-up message to the test host, so that the test host enters in a working state according to the wake-up message;
the sending the detection log to the network access device, and instructing the network access device to transfer the detection log to a test host comprising:
after sending the wake-up message to the network access device, sending (S306) the detection log to the network access device, and instructing the network access device to transfer the detection log to the test host.

2. The method according to claim 1, wherein the step (101) of establishing a connection with a preset device when a preset trigger condition is detected comprises: detecting (S401) preset input operation information, and establishing (S402) a connection with the preset device according to a preset identifier and a preset password.

3. The method according to claim 1, wherein the detection of a preset trigger condition comprises the detection of a network device having a preset identifier;
the preset device comprises the network device having a preset identifier; and
the step of establishing a connection with a preset device when a preset trigger condition is detected comprises:
detecting (S201, S301) the network device in a current network;
connecting (S202, S302), when the network device having a preset identifier is detected, the network device having a preset identifier according to a preset password corresponding to the preset identifier, and establishing a connection with the network device having the preset identifier.

4. A device for testing a terminal, comprised in a device under test, comprising:
an establishing module (51) configured to establish a connection with a preset device when a preset trigger condition is detected, wherein connection manners of the preset device include a wireless network equipment technology connection manner, a Bluetooth connection manner and a Near Field Communication connection manner;
a processing module (52) configured to start an automatic detection program to obtain an automatic detection result; and
a first sending module (53) configured to send the automatic detection result to the preset device.
wherein the first sending module (53) comprises:
a generating submodule (81) configured to generate a detection log according to the automatic detection result; and
a first sending submodule (82) configured to send the detection log to the preset device;
wherein the preset device is a network access device;
**characterized in that** the first sending module (53) comprises:
a second sending submodule (91) configured to send the detection log to the network access device, and instruct the network access device to transfer the detection log to a test host;
a second sending module (101) configured to send a wake-up message to the network access device, and instruct the network access device to transfer the wake-up message to the test host, so that the test host enters in a working state according to the wake-up message; wherein
the second sending submodule (91) is further configured to send, after sending the wake-up message to the network access device, the detection log to the network access device, and instruct the network access device to transfer the detection log to the test host.

5. The device according to claim 4, wherein the establishing module (51) comprises:
a first establishing submodule (61) configured to establish a connection with the preset device according to a preset identifier and a preset password when preset input operation information is detected.

6. The device according to claim 4, wherein the detection of a preset trigger condition comprises the detection of a network device having a preset identifier; the preset device comprising the network device having a preset identifier;
the establishing module (51) comprising:
a detecting submodule (71) configured to detect the network device in a current network; and
a second establishing submodule (72) configured to connect, when the network device having a preset identifier is detected, the network device having a preset identifier according to a preset password corresponding to the preset identifier, and establish a connection with the network device having the preset identifier.

7. A computer program including instructions for executing all of the steps of a method for testing a terminal according to any one of claims 1 to 3 when said program is executed by a computer.

8. A recording medium readable by a computer having recorded thereon a computer program including instructions for executing all of the steps of a method for testing a terminal according to any one of claims 1 to 3.

## Patentansprüche

1. Verfahren zum Testen eines Endgeräts, das von einem Testobjekt durchgeführt wird, umfassend:
Herstellen (S101) einer Verbindung mit einer voreingestellten Vorrichtung, wenn eine voreingestellte Triggerbedingung erkannt wird, wobei Verbindungsweisen der voreingestellten Vorrichtung eine drahtlose Netzvorrichtungstechnologie-Verbindungsweise, eine Bluetooth-Verbindungsweise, und eine Nahfeldkommunikations-Verbindungsweise aufweisen,
Starten (S102, S203, S304) eines automatischen Erkennungsprogramms, um ein automatisches Erkennungsergebnis zu erhalten, und
Senden (S103) des automatischen Erkennungsergebnisses an die voreingestellte Vorrichtung,
wobei der Schritt des Sendens des automatischen Erkennungsergebnisses an die voreingestellte Vorrichtung umfasst:
Erzeugen (S204, S305) eines Erkennungsprotokolls gemäß dem automatischen Erkennungsergebnis und
Senden (S205, S306) des Erkennungsprotokolls an die voreingestellte Vorrichtung,
wobei die voreingestellte Vorrichtung eine Netzzugangsvorrichtung ist,
**dadurch gekennzeichnet, dass** es ferner umfasst:
der Schritt des Sendens des Erkennungsprotokolls an die voreingestellte Vorrichtung umfasst:
Senden (S205) des Erkennungsprotokolls an die Netzzugangsvorrichtung und Anweisen der Netzzugangsvorrichtung, das Erkennungsprotokoll an einen Testhost zu übertragen, und
nach dem Schritt des Herstellens einer Verbindung mit einer voreingestellten Vorrichtung umfasst das Verfahren ferner:
Senden (S303) einer Wecknachricht an die Netzzugangsvorrichtung und Anweisen der Netzzugangsvorrichtung, die Wecknachricht an den Testhost zu übertragen, so dass der Testhost gemäß der Wecknachricht in einen Arbeitszustand eintritt,
wobei das Senden des Erkennungsprotokolls an die Netzzugangsvorrichtung und Anweisen der Netzzugangsvorrichtung, das Erkennungsprotokoll an einen Testhost zu übertragen, umfassen:
nach dem Senden der Wecknachricht an die Netzzugangsvorrichtung, Senden des Erkennungsprotokolls (S306) an die Netzzugangsvorrichtung und Anweisen der Netzzugangsvorrichtung, das Erkennungsprotokoll an den Testhost zu übertragen.

2. Verfahren nach Anspruch 1, wobei der Schritt (101) des Herstellens einer Verbindung mit einer voreingestellten Vorrichtung, wenn eine voreingestellte Triggerbedingung erkannt wird, umfasst: Erkennen (S401) von voreingestellten Eingabeoperationsinformationen, und Herstellen (S402) einer Verbindung mit der voreingestellten Vorrichtung gemäß einer voreingestellten Kennung und einem voreingestellten Passwort.

3. Verfahren nach Anspruch 1, wobei das Erkennen einer voreingestellten Triggerbedingung Erkennen einer Netzvorrichtung, die eine voreingestellte Kennung aufweist, umfasst,
wobei die voreingestellte Vorrichtung die Netzvorrichtung, die eine voreingestellten Kennung aufweist, umfasst, und
der Schritt des Herstellens einer Verbindung mit einer voreingestellten Vorrichtung, wenn eine voreingestellte Triggerbedingung erkannt wird, umfasst:
Erkennen (S201, S301) der Netzvorrichtung in einem aktuellen Netz,
Verbinden (S202, S302), wenn die Netzvorrichtung, die eine voreingestellte Kennung aufweist, erkannt wird, der Netzvorrichtung, die eine voreingestellte Kennung aufweist, gemäß einem voreingestellten Passwort, das der voreingestellten Kennung entspricht, und Herstellen einer Verbindung mit der Netzvorrichtung, die die voreingestellte Kennung aufweist.

4. Vorrichtung zum Testen eines Endgeräts, das in einem Testobjekt enthalten ist, umfassend:
ein Erstellungsmodul (51), das konfiguriert ist, eine Verbindung mit einer voreingestellten Vorrichtung herzustellen, wenn eine voreingestellte Triggerbedingung erkannt wird, wobei Verbindungsweisen der voreingestellten Vorrichtung eine drahtlose Netzvorrichtungstechnologie-Verbindungsweise, eine Bluetooth-Verbindungsweise, und eine Nahfeldkommunikations-Verbindungsweise aufweisen,
ein Verarbeitungsmodul (52), das konfiguriert ist, ein automatisches Erkennungsprogramm zu starten, um ein automatisches Erkennungsergebnis zu erhalten, und
ein erstes Sendemodul (53), das konfiguriert ist, das automatische Erkennungsergebnis an die voreingestellte Vorrichtung zu senden,
wobei das erste Sendemodul (53) umfasst:
ein Erzeugungssubmodul (81), das konfiguriert ist, ein Erkennungsprotokoll gemäß dem automatischen Erkennungsergebnis zu erzeugen, und
ein erstes Sendesubmodul (82), das konfiguriert ist, das Erkennungsprotokoll an die voreingestellte Vorrichtung zu senden,
wobei die voreingestellte Vorrichtung eine Netzzugangsvorrichtung ist,
**dadurch gekennzeichnet, dass** das erste Sendemodul (53) umfasst:
ein zweites Sendesubmodul (91), das konfiguriert ist, das Erkennungsprotokoll an die Netzzugangsvorrichtung zu senden und die Netzzugangsvorrichtung anzuweisen, das Erkennungsprotokoll an einen Testhost zu übertragen,
ein zweites Sendemodul (101), das konfiguriert ist, eine Wecknachricht an die Netzzugangsvorrichtung zu senden und die Netzzugangsvorrichtung anzuweisen, die Wecknachricht an den Testhost zu übertragen, so dass der Testhost gemäß der Wecknachricht in einen Arbeitszustand eintritt, wobei
das zweite Sendesubmodul (91) ferner konfiguriert ist, nach dem Senden der Wecknachricht an die Netzzugangsvorrichtung das Erkennungsprotokoll an die Netzzugangsvorrichtung zu senden und die Netzzugangsvorrichtung anzuweisen, das Erkennungsprotokoll an den Testhost zu übertragen.

5. Vorrichtung nach Anspruch 4, wobei das Erstellungsmodul (51) umfasst:
ein erstes Erstellungssubmodul (61), das konfiguriert ist, eine Verbindung mit der voreingestellten Vorrichtung gemäß einer voreingestellten Kennung und einem voreingestellten Passwort herzustellen, wenn eine voreingestellte Eingabeoperationsinformation erkannt wird.

6. Vorrichtung nach Anspruch 4, wobei das Erkennen einer voreingestellten Triggerbedingung Erkennen einer Netzvorrichtung, die eine voreingestellten Kennung aufweist, umfasst, wobei die voreingestellte Vorrichtung die Netzvorrichtung, die eine voreingestellte Kennung aufweist, umfasst,
wobei das Erstellungsmodul (51) umfasst:
ein Erkennungssubmodul (71), das konfiguriert ist, die Netzvorrichtung in einem aktuellen Netz zu erkennen, und
ein zweites Erstellungssubmodul (72), das konfiguriert ist, wenn die Netzvorrichtung, die eine voreingestellte Kennung aufweist, erkannt wird, die Netzvorrichtung, die eine voreingestellte Kennung aufweist, gemäß einem voreingestellten Passwort, das der voreingestellten Kennung entspricht, zu verbinden, und eine Verbindung mit der Netzvorrichtung, die die voreingestellte Kennung aufweist, herzustellen.

7. Computerprogramm, aufweisend Anweisungen zum Ausführen aller Schritte eines Verfahrens zum Testen eines Endgeräts nach einem der Ansprüche 1 bis 3, wenn das Programm von einem Computer ausgeführt wird.

8. Aufzeichnungsmedium, das von einem Computer gelesen werden kann, das ein darauf aufgezeichnetes Computerprogramm aufweist, das Anweisungen zum Ausführen aller Schritte eines Verfahrens zum Testen eines Endgeräts nach einem der Ansprüche 1 bis 3 aufweist.

## Revendications

1. Procédé de test d'un terminal, exécuté par un dispositif testé, comprenant :
l'établissement (S101) d'une connexion avec un dispositif prédéfini lorsqu'une condition de déclenchement prédéfinie est détectée, dans lequel les modes de connexion du dispositif prédéfini comprennent un mode de connexion de technologie d'équipement de réseau sans fil, un mode de connexion Bluetooth et un mode de connexion NFC ;
le lancement (S102, S203, S304) d'un programme de détection automatique afin d'obtenir un résultat de détection automatique ; et
l'envoi (S103) du résultat de détection automatique au dispositif prédéfini,
dans lequel l'étape d'envoi du résultat de détection automatique au dispositif prédéfini comprend :
la génération (S204, S305) d'un journal de détection selon le résultat de détection automatique ; et
l'envoi (S205, S306) du journal de détection au dispositif prédéfini,
dans lequel le dispositif prédéfini est un dispositif d'accès réseau ;
**caractérisé en ce qu'**il comprend en outre :
l'étape d'envoi du journal de détection au dispositif prédéfini, qui comprend :
l'envoi (S205) du journal de détection au dispositif d'accès réseau, et le fait de demander au dispositif d'accès réseau de transférer le journal de détection à un hôte de test ; et
après l'étape d'établissement d'une connexion avec un dispositif prédéfini, le procédé comprend en outre :
l'envoi (S303) d'un message de réveil au dispositif d'accès réseau, et le fait de demander au dispositif d'accès réseau de transférer le message de réveil à l'hôte de test, de sorte que l'hôte de test entre dans un état de fonctionnement selon le message de réveil ;
l'envoi du journal de détection au dispositif d'accès réseau, et le fait de demander au dispositif d'accès réseau de transférer le journal de détection à un hôte de test comprenant :
après l'envoi du message de réveil au dispositif d'accès réseau, l'envoi (S306) du journal de détection au dispositif d'accès réseau, et le fait de demander au dispositif d'accès réseau de transférer le journal de détection à l'hôte de test.

2. Procédé selon la revendication 1, dans lequel l'étape (101) d'établissement d'une connexion avec un dispositif prédéfini lorsqu'une condition de déclenchement prédéfinie est détectée comprend : la détection (S401) d'information d'opération de saisie prédéfinie, et l'établissement (S402) d'une connexion avec le dispositif prédéfini selon un identifiant prédéfini et un mot de passe prédéfini.

3. Procédé selon la revendication 1, dans lequel la détection d'une condition de déclenchement prédéfinie comprend la détection d'un dispositif de réseau qui possède un identifiant prédéfini ;
le dispositif prédéfini comprend le dispositif réseau qui possède un identifiant prédéfini ; et
l'étape d'établissement d'une connexion avec un dispositif prédéfini lorsqu'une condition de déclenchement prédéfinie est détectée comprend :
la détection (S201, S301) du dispositif réseau sur un réseau actuel ;
la connexion (S202, S302), lorsque le dispositif réseau possédant un identifiant prédéfini est détecté, du dispositif réseau possédant un identifiant prédéfini selon un mot de passe prédéfini correspondant à l'identifiant prédéfini, et l'établissement d'une connexion avec le dispositif réseau possédant l'identifiant prédéfini.

4. Dispositif de test d'un terminal, compris dans un dispositif testé, comprenant :
un module d'établissement (51) configuré pour établir une connexion avec un dispositif prédéfini lorsqu'une condition de déclenchement prédéfinie est détectée, dans lequel les modes de connexion du dispositif prédéfini comprennent un mode de connexion de technologie d'équipement de réseau sans fil, un mode de connexion Bluetooth et un mode de connexion NFC ;
un module de traitement (52) configuré pour lancer un programme de détection automatique afin d'obtenir un résultat de détection automatique ; et
un premier module d'envoi (53) configuré pour envoyer le résultat de détection automatique au dispositif prédéfini,
dans lequel le premier module d'envoi (53) comprend :
un sous-module de génération (81) configuré pour générer un journal de détection selon le résultat de détection automatique ; et
un premier sous-module d'envoi (82) configuré pour envoyer le journal de détection au dispositif prédéfini ;
dans lequel le dispositif prédéfini est un dispositif d'accès réseau ;
**caractérisé en ce que** le premier module d'envoi (53) comprend :
un second sous-module d'envoi (91) configuré pour envoyer le journal de détection au dispositif d'accès réseau, et pour demander au dispositif d'accès réseau de transférer le journal de détection à un hôte de test ;
un second module d'envoi (101) configuré pour envoyer un message de réveil au dispositif d'accès réseau, et pour demander au dispositif d'accès réseau de transférer le message de réveil à l'hôte de test, de sorte que l'hôte de test entre dans un état de fonctionnement selon le message de réveil ; dans lequel
le second sous-module d'envoi (91) est en outre configuré pour envoyer, après avoir envoyé le message de réveil au dispositif d'accès réseau, le journal de détection au dispositif d'accès réseau, et pour demander au dispositif d'accès réseau de transférer le journal de détection à l'hôte de test.

5. Dispositif selon la revendication 4, dans lequel le module d'établissement (51) comprend :
un premier sous-module d'établissement (61) configuré pour établir une connexion avec le dispositif prédéfini selon un identifiant prédéfini et un mot de passe prédéfini lorsque des informations d'opération de saisie prédéfinies sont détectées.

6. Dispositif selon la revendication 4, dans lequel la détection d'une condition de déclenchement prédéfinie comprend la détection d'un dispositif réseau possédant un identifiant prédéfini ; le dispositif prédéfini comprenant le dispositif réseau possédant un identifiant prédéfini ;
le module d'établissement (51) comprenant :
un sous-module de détection (71) configuré pour détecter le dispositif réseau dans un réseau actuel ; et
un second sous-module d'établissement (72) configuré pour connecter, lorsque le dispositif réseau qui possède un identifiant prédéfini est détecté, le dispositif réseau possédant un identifiant prédéfini selon un mot de passe prédéfini correspondant à l'identifiant prédéfini, et pour établir une connexion avec le dispositif réseau possédant l'identifiant prédéfini.

7. Programme informatique comprenant des instructions pour exécuter toutes les étapes d'un procédé de test d'un terminal selon l'une quelconque des revendications 1 à 3 lorsque ledit programme est exécuté par un ordinateur.

8. Support d'enregistrement lisible par un ordinateur stockant un programme informatique comprenant des instructions pour exécuter toutes les étapes d'un procédé de test d'un terminal selon l'une quelconque des revendications 1 à 3.
